# DEMANDE DE BREVET EUROPEEN

(11) **EP 4 276 208 A2**
(43) Date de publication de la demande: **15.11.2023**
(21) Numéro de dépôt: 23199329.6
(22) Date de dépôt: 19.05.2017
(51) Int. Cl.: C22B 7/00

(54) **PROCÉDÉ POUR LE RECYCLAGE DE MATÉRIAUX D'ÉLECTRODE DE BATTERIE AU LITHIUM**

(30) Priorité: 20.05.2016 US 201662339470 P
(62) Demande divisionnaire de: 17798465.5
(71) Demandeur: Hydro-Québec, Montréal, QC H2Z 1A4 (CA)
(72) Inventeur: AMOUZEGAR, Kamyab, MONT-ROYAL, H3R 2H9 (CA); BOUCHARD, Patrick, SHAWINIGAN, G9N 1B2 (CA); TURCOTTE, Nancy, ST-TITE, G0X 3H0 (CA); ZAGHIB, Karim, LONGUEUIL, J4N 1T8 (CA)
(74) Mandataire: Lavoix

(57) **Abrégé**

Un procédé pour le recyclage d'un matériau électrochimiquement actif est décrit. Le procédé comprend les étapes de réaction du matériau électrochimiquement actif avec un agent oxydant ou un agent réducteur dans un solvant sans ajout d'acide fort, pour produire un sel de lithium et un précipité de matériau électrochimiquement actif dé-lithié. Ce précipité est séparé du sel de lithium et utilisé dans la régénération du matériau électrochimiquement actif.

## Description

### DEMANDE PRIORITAIRE

La présente demande revendique la priorité, sous la loi applicable, de la demande provisoire américaine no 62/339,470 déposée le 20 mai 2016, le contenu de laquelle est incorporé ici par référence dans son intégralité et à toutes fins.

### DOMAINE TECHNIQUE

Le domaine technique concerne généralement un procédé de recyclage de matériaux d'électrode de batteries au lithium, et plus particulièrement pour le recyclage de batteries au lithium métallique et lithium-ion usées.

### CONTEXTE

Les piles au lithium sont largement utilisées dans des domaines techniques tels que l'électronique domestique ou la propulsion automobile. Cependant, l'élimination de ces piles au bout de leur vie utile peut être dangereuse en ce qui concerne les considérations relatives à la sécurité et à l'environnement. En outre, des matériaux à coûts élevés impliquent des procédés coûteux pour la fabrication de batteries au lithium. C'est pourquoi il existe un besoin pour le développement de procédés de démontage et de recyclage efficaces des matériaux de batteries au lithium.

De manière générale, les piles déchargées doivent d'abord passer par une étape de désactivation pour minimiser tout danger relié à l'énergie résiduelle stockée. Plusieurs stratégies telles que l'approche cryogénique (Cost of lithium-Ion Batteries for Vehicles, Linda Gaines and Roy Cuenca, Argonne National Laboratory, Septembre 2000) ou la manipulation sous atmosphère inerte ont été utilisées. Le solvant peut être récupéré soit par évaporation, soit par d'autres moyens, tels que l'utilisation de CO₂ critique comme solvant (Yuanlong Liu et al., RSC Advances, 2014, 97, 54525-54531 ; et brevet US No 8,067,107.

Une fois la désactivation assurée, les étapes de broyage et de déchiquetage suivies des opérations de tri et de tamisage permettent une séparation mécanique du boîtier extérieur, du séparateur et des électrodes des batteries au lithium. La séparation du matériau d'électrode et de la feuille du collecteur de courant est effectuée soit par dissolution du liant dans un solvant approprié (Tong Dongge et al., Journal of Chemical Industry and Engineering (CHINA), 2005, 56, 10, 4) tel que la N-méthyl-2-pyrrolidone (NMP), par exemple, ou par sa décomposition thermique à haute température.

À l'heure actuelle, il existe deux approches principales pour la récupération des matériaux actifs d'électrode, également appelés matériaux électrochimiquement actifs. La première est basée sur des techniques pyro-métallurgiques, dans lesquelles les constituants de la batterie sont soumis à des températures très élevées afin de récupérer des éléments tels que le cobalt, le nickel ou le manganèse, et où, jusqu'à présent, le lithium et l'aluminium ne sont pas récupérés *(*Life-cycle analysis for Lithium-ion batteries production and recycling, Linda Gaines, John, 90th Annual Meeting of the Transportation Research Board, Washington D.C, Janvier 2011).

L'autre approche est basée sur des techniques hydro-métallurgiques, principalement le lessivage (ou lixiviation) acide, suivi d'étapes d'extraction et/ou de précipitation. Les agents de lixiviation connus utilisés dans les procédés classiques sont l'acide chlorhydrique (P. Zhan et al., Hydrometallurgy, 47 (1998) 259-271), un mélange d'acide sulfurique et de peroxyde d'hydrogène (D.P. Mantuano et al., J. Power Sources, 159 (2006) 1510-1518), ou un mélange d'acide nitrique et de peroxyde d'hydrogène (C.K. Lee, K.I. Rhee, Hydrometallurgy, 68 (2003) 5-10).

Le principal inconvénient des techniques hydro-métallurgiques actuellement proposées est que l'utilisation d'acides forts pour la lixiviation entraîne la dissolution non sélective de tous les composants actifs d'électrodes (c'est-à-dire le lithium et les métaux de transition). Ceci implique la nécessité de plusieurs étapes supplémentaires d'extraction et/ou de précipitation (S. Castillo et al., Journal of Power Sources, 112 (2002) 247-254) afin de récupérer chaque élément. De plus, les acides forts mentionnés ci-dessus doivent être utilisées à haute concentration et à des températures relativement élevées. Dans le cas de l'acide chlorhydrique, la manipulation du chlore libéré implique aussi des coûts d'exploitation plus élevés ainsi que des problèmes environnementaux supplémentaires.

Lorsque le LiFePO₄ est mis en contact avec une solution de H₂SO₄ (4M) à 75 °C en présence de H₂O₂, la totalité de la matière active d'électrode est dissoute sous forme de sulfate de lithium et de fer. Ceci implique des étapes supplémentaires pour la précipitation sélective du fer, habituellement par ajustement du pH (impliquant l'utilisation de quantités importantes d'hydroxydes pour neutraliser l'excès d'acide), suivie d'une récupération du lithium, habituellement par addition d'un carbonate tel que le carbonate de sodium ou sa conversation en hydroxyde de lithium. Le seul cas rapporté d'extraction sélective de lithium à partir de matériau usé d'électrode est basé sur l'utilisation de l'acide oxalique, impliquant également l'utilisation d'un réactif relativement coûteux. La méthode doit aussi être exécutée à température élevée (c'est-à-dire à 80°C) (J.S. Sohn et al., Advanced Processing of Metals and Materials, Sohn International Symposium, Proceedings, San Diego, CA, USA, 27-31 août 2006 (2006), Vol. 6, 135-143).

Par conséquent, comme on peut le voir, les approches classiques pour le recyclage de matériaux actifs d'électrodes usées de piles au lithium ne sont pas sélectives et impliquent l'utilisation de réactifs assez corrosifs, de conditions à haute température et la formation de plusieurs sous-produits, ce qui entraîne des coûts de recyclage plus élevés.

Il existe donc un besoin pour un procédé de recyclage impliquant des réactifs moins agressifs, des conditions non critiques et/ou permettant le recyclage sélectif du matériau actif de l'électrode.

### SOMMAIRE

Selon un premier aspect, la présente se réfère à un procédé pour le recyclage d'un matériau électrochimiquement actif. Le procédé comprend les étapes de : (a) réaction du matériau électrochimiquement actif avec un agent oxydant ou un agent réducteur dans un solvant (par exemple, un solvant aqueux), pour produire un sel de lithium et un précipité de précurseur de matériau électrochimiquement actif; (b) séparation du précipité de précurseur de matériau électrochimiquement actif du sel de lithium; et (c) régénération du matériau électrochimiquement actif à partir du précurseur de matériau électrochimiquement actif. Selon un mode de réalisation, le solvant est l'eau.

Selon un mode de réalisation, l'étape (a) comprend en outre l'injection de CO₂ gazeux afin d'augmenter la solubilité du sel de lithium dans le solvant. Selon un autre mode de réalisation, l'étape (c) comprend le chauffage du sel de lithium pour récupérer le CO₂ gazeux et un sel de lithium recyclé. Selon un autre mode de réalisation, l'agent oxydant comprend du peroxyde d'hydrogène, ou de l'ozone, ou encore de l'oxygène. L'agent oxydant peut également comprendre un sel de persulfate.

Selon un exemple, l'étape (c) comprend également la soumission du sel de lithium à une électrolyse, une solution d'un sel de sodium, ou une injection de CO₂ afin de récupérer un sel de lithium recyclé. Dans certaines instances, le sel de lithium ainsi récupéré est utilisé pour régénérer le matériau électrochimiquement actif.

Selon un autre aspect, la présente technologie se réfère aussi à une méthode pour le recyclage de matériau d'électrode de batteries au lithium, dans laquelle le matériau d'électrode usé séparé est mis en suspension dans un milieu aqueux et réagi avec du CO₂ en présence d'un agent oxydant ou réducteur afin de séparer sélectivement et efficacement le contenu en lithium en tant que bicarbonate de lithium et de récupérer le reste du matériau actif d'électrode comme solide par une méthode de séparation. La phase liquide séparée est alors traitée pour récupérer le contenu en lithium qui sera recyclé dans la fabrication de nouveau matériau d'électrode avec les autres éléments de matériau d'électrode récupérés de la phase solide.

Selon un mode de réalisation, la pression en CO₂ dans le réacteur peut varier entre 1 et 10 atmosphères, mais plus préférentiellement entre 1 et 5 atmosphères. Le mélange réactionnel peut être refroidi en deçà de la température ambiante afin d'augmenter la solubilité du bicarbonate de lithium. La réaction peut être effectuée entre 10 et 30 °C, par exemple, entre 20 et 25 °C.

Selon un autre mode de réalisation, l'agent oxydant ou réducteur est le peroxyde d'hydrogène, qui est utilisé en quantités stoechiométriques ou faiblement en excès par rapport au métal de transition à être oxydé ou réduit.

Selon un exemple, la phase solide séparée contient du FePO₄ de pureté élevée, le FePO₄ maintenant sa structure crystalline, permettant ainsi sa réutilisation dans la fabrication de nouveau matériau d'électrode.

Selon un mode de réalisation, une fois la phase solide séparée, la phase liquide est chauffée à températures élevées, de préférence d'environ 90 °C, afin de récupérer le lithium sous forme de précipité de carbonate de lithium. Le précipité de carbonate de lithium est ensuite séché et réutilisé dans la fabrication de matériau d'électrode, et le CO₂ gazeux libéré et la solution contenant du carbonate et/ou du bicarbonate de lithium résiduels sont recyclés dans la réaction avec d'autres matériaux d'électrode usés.

Selon un autre aspect, la présente technologie concerne aussi une méthode pour le recyclage de matériau d'électrode de batteries au lithium, dans laquelle le matériau d'électrode usé séparé est mis en suspension dans un milieu aqueux et réagi avec du Li₂S₂O₈ pour extraire le lithium du matériau d'électrode, sous forme de sulfate de lithium dans la phase liquide, l'oxyde de métal de transition demeurant dans la phase solide. La phase solide est séparée par un procédé de séparation conventionnel et réutilisée pour la formation d'un nouveau matériau d'électrode. La phase liquide est alors séparée en deux fractions. L'une est utilisée comme matériau ajouté à l'anolyte d'une cellule électrolytique dans laquelle le sulfate de lithium est réoxydé au persulfate de lithium, qui sera utilisé à nouveau pour traiter d'autres matériaux d'électrode de batterie usée. L'autre fraction de la phase liquide contenant du sulfate de lithium sera utilisée pour récupérer du lithium sous forme d'autres sels tels que le carbonate de lithium (en utilisant du CO₂ ou un autre sel de carbonate tel que le carbonate de sodium Na₂CO₃) ou de l'hydroxyde de lithium LiOH par électrolyse de dissociation de sel.

Selon un mode de réalisation, la réaction est effectuée entre 5 et 60°C, ou entre 20 et 40°C, puisqu'à des températures plus élevées, le persulfate sera moins stable.

Selon un autre mode de réalisation, la première fraction de la phase liquide contenant du sulfate de lithium est convertie en hydroxyde de lithium et en acide sulfurique par électrolyse. Le LiOH est ensuite réagi avec du persulfate d'ammonium pour produire du persulfate de lithium, lequel est utilisé pour traiter d'autres matériaux d'électrode de batterie usée.

Selon un autre mode de réalisation, la réaction entre LiOH et (NH₄)₂S₂O₈ est effectuée sous vide pour faciliter l'élimination de NH₃ gazeux lequel est recyclé dans la formation de sulfate d'ammonium qui, à son tour, est ensuite ajouté à l'anolyte d'une cellule électrolytique pour produire du persulfate d'ammonium.

### BRÈVE DESCRIPTION DES DESSINS

La Figure 1 est une représentation schématique d'un procédé selon un mode de réalisation.
La Figure 2 montre un diagramme de diffraction des rayons-X d'un échantillon soumis au procédé selon un mode de réalisation.
La Figure 3 est une représentation schématique d'un procédé selon un autre mode de réalisation.
La Figure 4 montre l'efficacité de la lixiviation pour différents types de matériaux actifs en fonction du temps conformément à l'Exemple 1 de la description.
La Figure 5 montre l'efficacité de la lixiviation pour différents types de matériaux actifs en fonction du temps conformément à l'Exemple 2 de la description.
La Figure 6 montre l'efficacité de la lixiviation pour différents types de matériaux actifs en fonction du temps conformément à l'Exemple 3 de la description.
La Figure 7 montre l'efficacité de la lixiviation pour différents types de matériaux actifs en fonction du temps conformément à l'Exemple 5 de la description.
La Figure 8 montre l'efficacité de la lixiviation pour différents types de matériaux actifs en fonction du temps conformément à l'Exemple 6 de la description.
La Figure 9 montre l'efficacité de la lixiviation pour différents types de matériaux actifs en fonction du temps conformément à l'Exemple 7 de la description.
La Figure 10 montre l'efficacité de la lixiviation pour différents types de matériaux actifs en fonction du temps conformément à l'Exemple 8 de la description.

### DESCRIPTION DÉTAILLÉE

Cette demande concerne un procédé pour le recyclage de matériaux électrochimiquement actifs de batteries au lithium. Plus particulièrement, l'objet de la présente demande concerne la récupération des composants électrochimiquement actifs du matériau d'électrode une fois qu'il a été séparé du reste des éléments de la batterie.

De nouvelles approches qui permettent de réaliser une extraction sélective du composant lithium à partir du matériau d'électrode électrochimiquement actif, sans l'utilisation de conditions d'acide fort ou de haute température, sont présentées ci-après.

Dans un premier aspect, un matériau d'électrode récupéré à partir de la séparation des composants de la batterie et comprenant le matériau électrochimiquement actif est mis en contact avec un agent oxydant ou un agent réducteur contenu dans un solvant, éventuellement en présence de CO₂. Cette étape exclue la présence d'un acide fort tel que l'acide chlorhydrique, sulfurique, nitrique, etc. Le choix de l'agent oxydant ou réducteur dépend du type de matériau d'électrode utilisé. Le présent procédé peut être adapté au recyclage de matériau de cathode ou au recyclage de matériau d'anode. La première étape du procédé est donc la réaction du matériau électrochimiquement actif avec un agent oxydant ou un agent réducteur dans un solvant. Ceci produit un sel de lithium et un précipité de précurseur de matériau électrochimiquement actif (c'est-à-dire, un matériau électrochimiquement actif dé-lithié, totalement ou en partie), appelé ci-après précipité de précurseur. Dans un mode de réalisation, le mélange comprenant le matériau électrochimiquement actif est dispersé dans le solvant. Dans un mode de réalisation préféré, le solvant est de l'eau, et le sel de lithium produit est en solution.

Le matériau électrochimiquement actif peut être un oxyde, un oxyde complexe, un phosphate, un silicate, etc. Par exemple, il pourrait être LiFePO₄, ou tout autre matériau électrochimiquement actif connu de la personne versée dans l'art. Dans le cas de LiFePO₄, le précipité de précurseur formé est FePO₄. Le sel de lithium produit peut être du LiHCOs, ou Li₂SO₄, par exemple. Un exemple d'agent oxydant utile est le peroxyde d'hydrogène (H₂O₂). D'autres agents oxydants peuvent être utilisés, tels que l'oxygène (O₂), l'ozone (O₃), l'air, etc. La personne du domaine reconnaîtra que le peroxyde d'hydrogène peut être utilisé à la fois comme agent oxydant ou réducteur. L'agent oxydant ou réducteur peut être utilisé en quantités stoechiométriques ou légèrement en excès (c'est-à-dire, un excès de 5% en moles à 10% en moles) par rapport au métal de transition à être oxydé ou réduit. La personne versée dans l'art appréciera que l'agent oxydant ou réducteur puisse par contre être utilisé en plus grand excès.

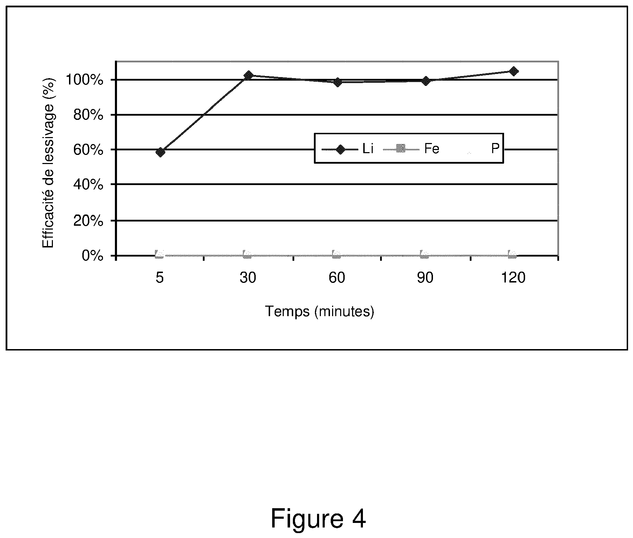

La première étape de réaction du procédé peut également comprendre l'injection de CO₂ dans la solution. Le CO₂ est barboté dans la solution et augmente la solubilité du sel de lithium dans le solvant. Ceci augmente, par le fait même, l'efficacité de la lixiviation du procédé. Par exemple, tel qu'illustré à la Figure 4, il a été découvert que, lorsqu'une poudre contenant du LiFePO₄ réagit avec une solution aqueuse contenant un agent oxydant comme le H₂O₂, en présence de CO₂ barboté, le lithium peut être lixivié avec des taux d'extraction allant jusqu'à 100% à partir de la poudre, de manière très sélective, par exemple, moins de 1% du fer Fe ou 4% du phosphore P est extrait avec le lithium. Le précipité de précurseur contenu dans la phase solide maintient, en très grande partie ou entièrement, sa structure cristalline pendant l'étape réactionnelle.

Etant donné que la cinétique de réaction entre le matériau électrochimiquement actif et l'agent oxydant ou réducteur est assez rapide à température ambiante, des conditions de haute température ne sont pas nécessaires. Le mélange réactionnel peut être refroidi en dessous de la température ambiante afin d'augmenter la solubilité du bicarbonate de lithium. Toutefois, pour des raisons économiques, la réaction peut être effectuée entre 10 et 30 °C, ou entre 20 et 25 °C. En fait, à des températures plus élevées, la solubilité du sel de lithium (par exemple, le carbonate de lithium) diminue, ce qui nécessite des réacteurs de volume supérieur et une récupération de lithium plus faible. La réaction peut être effectuée dans un réacteur à la pression atmosphérique ou à une pression plus élevée. Il a été observé que la solubilité du sel de lithium s'accroit avec une augmentation de la pression en CO₂. Cependant, à des pressions supérieures à 10 atm., la solubilité commence à atteindre un plateau et il n'y a que peu de gain de solubilité. Par conséquent, la pression de réaction sera de préférence comprise entre 1 et 10 atm.

Dans une deuxième étape, le mélange de sel de lithium et de précipité de précurseur produit est soumis à une séparation. Etant donné que le précipité du précurseur reste solide pendant la réaction, il peut être séparé de la solution de sel de lithium par toute technique de séparation connue de la personne versée dans l'art, par exemple, par filtration ou centrifugation.

Une fois le précipité de précurseur et le sel de lithium séparés, le procédé comprend la régénération du matériau électrochimiquement actif à partir dudit précipité de précurseur.

Par conséquent, dans un mode de réalisation de la présente technologie, le procédé de recyclage comprend une étape de régénération. Le précipité de précurseur récupéré dans l'étape de séparation est utilisé pour la fabrication de nouveaux matériaux de lithium électrochimiquement actifs. Dans certains modes de réalisation, l'étape de régénération comprend également la récupération du lithium compris dans le sel de lithium. La récupération du lithium implique le chauffage du sel de lithium récupéré lors de la séparation pour produire un sel de lithium recyclé, du CO₂ gazeux et une solution résiduelle de sel de lithium. Le sel de lithium peut être chauffé à une température de 50°C à 100°C, de préférence à une température de 85°C à 95°C. Dans certains modes de réalisation, le sel de lithium est chauffé à température élevée, de préférence à environ 90 °C. Le sel de lithium recyclé est ensuite utilisé dans la fabrication de nouveaux matériaux électrochimiquement actifs, et le CO₂ gazeux récupéré peut être réinjecté à la première étape de réaction du présent procédé. Enfin, la solution résiduelle de sel de lithium peut également être réintroduite dans le mélange réactionnel de la première étape précédemment mentionnée.

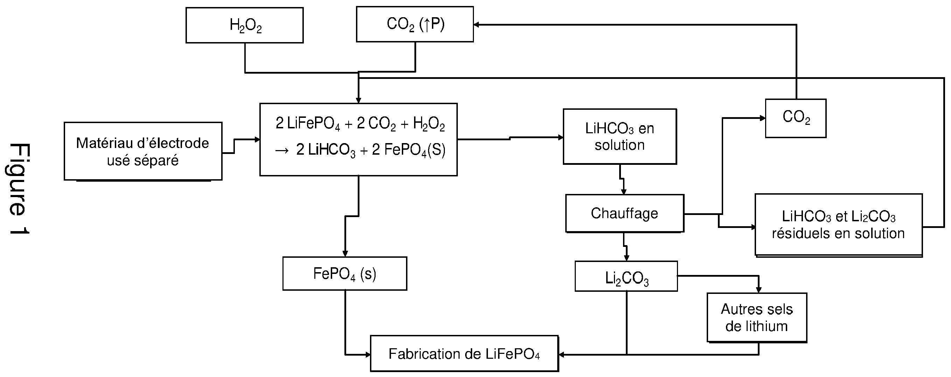

Dans un mode de réalisation du procédé, illustré à la Figure 1, le mélange d'électrode récupéré d'un matériau de cathode, lequel comprend le matériau électrochimiquement actif LiFePO₄, est dispersé dans une solution aqueuse contenant du peroxyde d'hydrogène H₂O₂ et est traité avec du CO₂, lequel est barboté dans la suspension. Dans ce cas, le peroxyde d'hydrogène (H₂O₂) agit comme agent oxydant sur le LiFePO₄ et le lithium contenu à l'intérieur est lixivié sous forme de bicarbonate de lithium (LiHCOs) selon l'équation suivante :

2 LiFePO₄ (S) + H₂O₂ + 2 CO₂ → 2 LiHCO₃ + 2 FePO₄ (S) (éq. 1)

Le sel de lithium est récupéré dans la phase liquide sous forme de bicarbonate de lithium, qui peut être recyclé en tant que sel de lithium, par exemple sous forme de précipité solide de carbonate de lithium (Li₂CO₃) sans addition de tout autre réactif chimique.

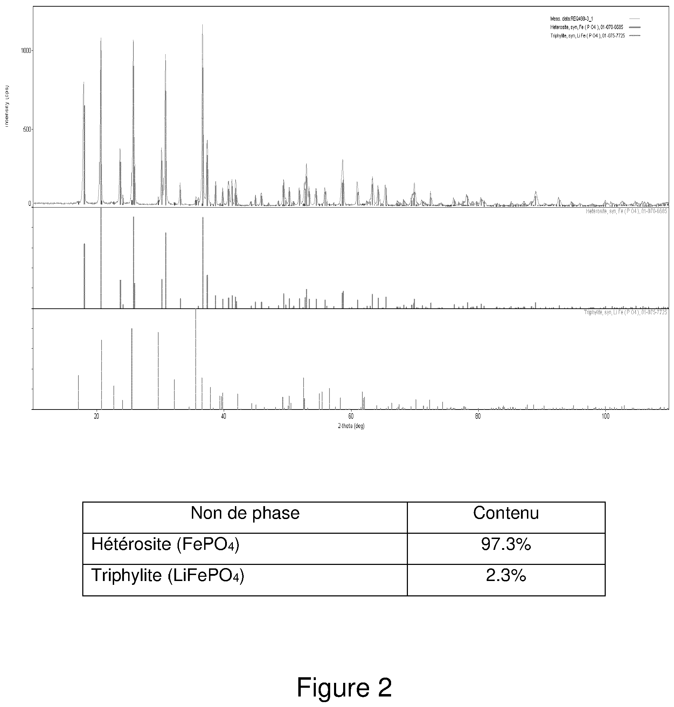

Le phosphate de fer (FePO₄) formé lors de la première étape de réaction reste sous forme solide et peut être séparé de la suspension. Une analyse par diffraction des rayons X montre que la structure cristalline de FePO₄ reste intacte, de sorte que ce matériau peut être facilement retourné à la fabrication de nouveaux matériaux de cathode de LiFePO₄. Par exemple, la Figure 2 montre le spectre de diffraction des rayons X, ainsi que le tableau de la teneur résultante, d'un échantillon soumis à une extraction de lithium en utilisant du CO₂ et du H₂O₂, telle qu'ici décrite. Le solide séparé par filtration montre une teneur de 97.3% en FePO₄ et une teneur de 2.3% en LiFePO₄. La solution séparée de sel de lithium contenant du bicarbonate de lithium LiHCO₃ peut ensuite être chauffée dans un précipitateur pour récupérer le carbonate de lithium solide Li₂CO₃, selon l'équation suivante :

2LiHCO₃ → Li₂CO₃ (S) + H₂O + CO₂ ↑ (éq. 2)

Tel qu'illustré à la Figure 1, le carbonate de lithium et le bicarbonate de lithium résiduels, ainsi que le CO₂ libéré, peuvent être réintroduits à la première étape de réaction (ou l'étape de carbonatation) pour le traitement de matériau usé d'électrode. Alternativement, le bicarbonate de lithium peut être converti en sels de lithium autres que le carbonate de lithium. De tels sels de lithium peuvent comprendre n'importe quel sel de lithium connu de la personne versée dans l'art, dépendamment de l'application. Le phosphate de fer, le carbonate de lithium, ou d'autres sels de lithium potentiels récupérés de l'étape de régénération, peuvent être utilisés dans la fabrication de nouveaux matériaux électrochimiquement actifs d'électrode comprenant du LiFePO_{4,} par exemple, pour utilisation dans des batteries au lithium.

Dans un autre aspect de la présente technologie, le matériau d'électrode récupéré à partir de la séparation des composants de la batterie et comprenant le matériau électrochimiquement actif est mis en contact avec un agent oxydant ou réducteur contenu dans un solvant. L'agent oxydant peut être un sel de persulfate. Cette mise en contact produit un sel de lithium et un précipité de précurseur de matériau électrochimiquement actif (précipité de précurseur). Dans un mode de réalisation, le mélange comprenant le matériau électrochimiquement actif est dispersé dans le solvant. Le solvant peut être de l'eau, de sorte que le sel de lithium soit récupéré sous forme de solution de sel de lithium. La réaction peut être effectuée entre 5 °C et 60 °C, mais plus particulièrement entre 20 °C et 40 °C. En effet, à des températures plus élevées, le persulfate sera moins stable.

Dans un mode de réalisation, le sel de lithium produit lors de la première étape de réaction est hautement soluble dans le solvant, de sorte qu'il n'est pas nécessaire d'utiliser du CO₂ pour augmenter la solubilité du sel de lithium.

Tel que décrit précédemment, le sel de lithium et le précipité de précurseur produits dans l'étape réactionnelle sont soumis à une étape de séparation. Puisque le précipité de précurseur reste à l'état solide pendant la réaction, il peut être séparé de la solution de sel de lithium par filtration, centrifugation, etc.

Après l'étape de séparation, le procédé comprend la régénération du matériau électrochimiquement actif à partir du précipité de précurseur, qui peut être directement utilisé dans la fabrication de nouveaux matériaux électrochimiquement actifs.

Dans certains modes de réalisation, l'étape de régénération comprend également la récupération du lithium compris dans le sel de lithium. Pour ce faire, le sel de lithium récupéré à partir de l'étape de séparation est soumis à une électrolyse, un sel de sodium ou du CO₂.

Dans certains modes de réalisation, une partie du sel de lithium est récupérée sous forme de sel de persulfate et réutilisée comme agent oxydant ou réducteur dans la première étape réactionnelle. Le reste du sel de lithium récupéré peut être converti en d'autres sels de lithium tels que le carbonate de lithium (en utilisant du CO₂ ou du carbonate de sodium) ou de l'hydroxyde de lithium (par électrolyse) afin d'être réutilisé dans la fabrication de matériaux électrochimiquement actifs de batterie au lithium (tels que LiFePO₄).

Dans un mode de réalisation, de l'hydroxyde de lithium peut être utilisé pour produire du persulfate de lithium (Li₂S₂O₈) par sa réaction avec le persulfate d'ammonium ((NH₄)₂S₂O₈). L'ammoniac (NH₃) libéré peut être récupéré pour former du sulfate d'ammonium ((NH₄)₂SO₄) par réaction avec l'acide sulfurique obtenu à partir de l'électrolyse du sulfate de lithium (Li₂SO₄). Le sulfate d'ammonium formé de cette manière peut facilement être transformé en persulfate d'ammonium par son électrolyse directe.

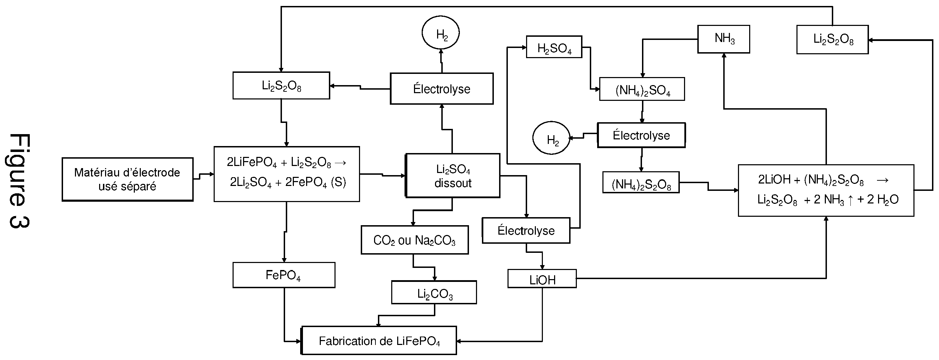

Dans un mode de réalisation préféré, illustré à la Figure 3, une suspension de matériau usé d'électrode comprenant du LiFePO₄ est traitée avec une solution aqueuse de persulfate de lithium, ce qui conduit à la lixiviation sélective et complète du lithium sous forme de sulfate de lithium Li₂SO₄. Comme l'illustre la Figure 4, le procédé résulte en moins de 1% de lessivage du fer. Le phosphate de fer reste principalement sous la forme de solide en suspension selon la réaction suivante :

2 LiFePO₄ (S) + Li₂S₂O₈ → 2 Li₂SO₄ + 2 FePO₄ (S) (éq. 3)

En ce qui concerne la Figure 3, le phosphate de fer formé au cours de la première étape réactionnelle demeure sous forme solide, lequel peut être séparé de la suspension et facilement réutilisé dans la fabrication de nouveaux matériaux de cathode de LiFePO₄. La solution de sulfate de lithium est alors recyclée afin de produire d'autres sels de lithium tels que le carbonate de lithium (par ajout de carbonate de sodium ou utilisation de CO₂), ou l'hydroxyde de lithium, par électrolyse dans une opération de dissociation de sel. Tel qu'illustré à la Figure 3, l'électrolyse du sulfate de lithium produit l'hydroxyde de lithium et l'acide sulfurique. De plus, une partie du sel de lithium obtenu peut être utilisé pour régénérer le persulfate de lithium, et réintroduit dans le procédé. La régénération du persulfate de lithium peut se faire par électrolyse directe du sulfate de lithium du côté anodique d'une cellule électrolytique adaptée à la production de persulfate. Le persulfate de lithium peut aussi être régénéré par la réaction entre une partie du LiOH et du persulfate d'ammonium produits, selon la réaction suivante:

2 LiOH + (NH₄)₂S₂O₈ → Li₂S₂O₈ + 2 NH₃↑ (éq. 4)

La réaction ci-dessus est effectuée sous vide, et de préférence avec un gaz inerte barbotant dans la solution, afin d'évacuer rapidement l'ammoniac gazeux libéré et de minimiser sa réaction avec le persulfate d'ammonium. L'ammoniac peut être recyclé et utilisé dans la formation de sulfate d'ammonium par sa réaction avec l'acide sulfurique formé durant la transformation électrolytique du sulfate de lithium en hydroxyde de lithium. Le sulfate d'ammonium est alors utilisé dans la production électrolytique de persulfate d'ammonium qui est alors utilisé pour produire du persulfate de lithium selon l'équation 4.

Les exemples qui suivent sont à titre illustratifs et ne devraient en aucun cas être interprétés afin de limiter la portée de l'invention telle que décrite dans la présente demande.

### EXEMPLES

### Exemple 1

Afin de simuler l'application des conditions proposées de lixiviation (ou lessivage) basées sur l'utilisation de CO₂ gazeux et d'un agent oxydant, un nouveau matériau de cathode contenant principalement du LiFePO₄ avec de petites quantités de fluorure de polyvinylidène (PVDF) et de graphite a été utilisé pour représenter le matériau d'électrode usé récupéré. Une partie de ce matériau a été dispersé dans 100 parties d'une solution aqueuse contenant 0,5 % en poids de H₂O₂ dans un réacteur agité, du CO₂ gazeux étant barboté dans la solution aqueuse, sous une pression de 30 psi, et à 25 °C. Le rapport molaire LiFePO₄/H₂O₂ était donc de 2,77. Des échantillons ont été prélevés toutes les 30 minutes et la concentration de Li, Fe et P dans la solution a été déterminée par analyse par plasma à couplage inductif (ICP). Les résultats ont ensuite été utilisés pour calculer l'efficacité de lixiviation du procédé envers chaque élément. Ces résultats sont présentés à la Figure 4. Il a été constaté qu'après 30 minutes, tout le contenu en lithium du matériau d'électrode avait été dissout sous forme de bicarbonate de lithium tandis que moins de 0,5% du fer et 3,5% du phosphore ont été extraits. Ceci démontre les très grandes sélectivité et efficacité du présent procédé pour la lixiviation du lithium.

Lorsque la même réaction a été effectuée en présence du même rapport LiFePO₄/H₂O₂ mais en l'absence de CO₂, seulement 3% du lithium a été extrait. De plus, lorsque le CO₂ seul est utilisé pour traiter le matériau d'électrode, même à une pression en CO₂ de 75 psi, seulement 12% du lithium a été extrait (voir le tableau 1 ci-dessous). Ces résultats démontrent que la présence de CO₂ et de H₂O₂ est essentielle à l'efficacité élevée de la lixiviation du lithium. Dans tous les cas, l'extraction est très sélective vis-à-vis du lithium, comme en témoigne l'efficacité de lixiviation pour Li et Fe dans le tableau 1.

**Tableau 1**

| Conditions de lixiviation | Efficacité de lixiviation de Li (%) | Efficacité de lixiviation de Fe (%) |
|---|---|---|
| Lixiviation avec H₂O₂ | 3% | < 0,1% |
| Lixiviation avec CO₂ | 12% | 0,2% |
| Lixiviation avec CO₂ et H₂O₂ | 100% | 0,3% |

### Exemple 2

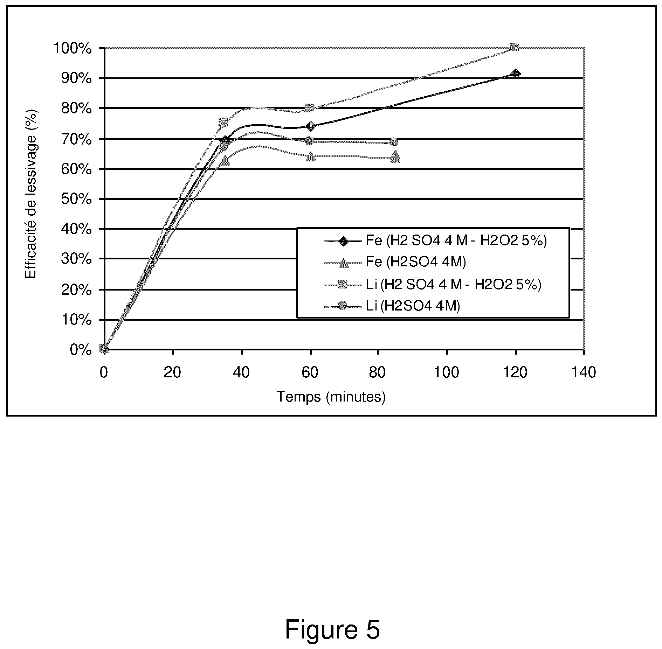

Pour fins de comparaison, la même réaction a été effectuée avec de l'acide sulfurique au lieu du CO₂. Une partie d'un matériau de cathode contenant du LiFePO₄ a été ajoutée à une solution aqueuse de H₂SO₄ à 4M sous deux conditions différentes, l'une en présence de 5% en poids de H₂O₂ et l'autre en l'absence de H₂O₂. Dans les deux cas la suspension a été chauffée à 75°C sous agitation, et des échantillons filtrés de la phase aqueuse ont été analysés par ICP afin de déterminer la teneur en Li et Fe à différents intervalles de temps. Tel qu'illustré à la Figure 5, dans le cas sans H₂O₂ seulement 70% du lithium est extrait, tandis que l'addition de H₂O₂ permet d'atteindre 100% d'efficacité d'extraction de lithium. Cependant, dans les deux cas, des quantités importantes de FePO₄ (65% à 90%) sont également lixiviées dans la solution, indiquant un manque absolu de sélectivité entre l'extraction de Li et de Fe. Donc, en présence d'un acide fort tel que l'acide sulfurique, la séparation du fer du lithium nécessite l'application de réactifs chimiques et d'étapes supplémentaires (tels que des étapes d'ajustement contrôlé du pH et de filtration) après l'étape de récupération du lithium. En outre, contrairement au présent procédé, le fer récupéré doit être reconverti en FePO₄ avant son utilisation pour fabriquer un nouveau matériau d'électrode.

### Exemple 3

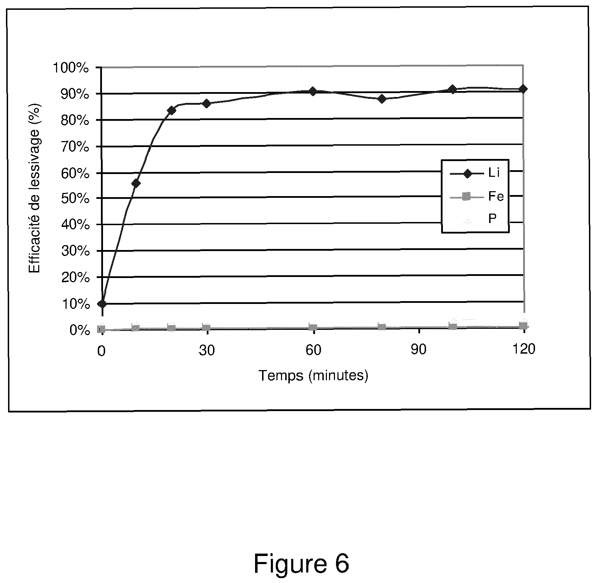

L'expérience présentée à l'Exemple 1 a été répétée mais cette fois avec cinq fois la quantité de solide. Par conséquent, 5 parties de matériau cathodique ont été mises en suspension dans 100 parties d'une solution aqueuse contenant 0,5% en poids de H₂O₂ dans un réacteur agité, du CO₂ gazeux étant barboté dans la solution sous une pression de 30 psi et à 25°C. Dans ce cas, le rapport molaire LiFePO₄/H₂O₂ était de 0,55, ce qui ne représente qu'une petite quantité excédentaire de 10% en termes de quantité stoechiométrique de H₂O₂ nécessaire pour une lixiviation complète de Li. La Figure 6 présente les résultats d'efficacité de lixiviation pour Li, Fe et P. L'efficacité de lixiviation totale pour le lithium était supérieure à 92%, alors que l'efficacité de lixiviation pour le Fe était de 1%. Ceci confirme de nouveau l'efficacité élevée et la sélectivité très élevée du présent procédé pour l'extraction du lithium, ainsi que la possibilité de récupérer la quasi-totalité du FePO₄ pour la fabrication de nouveaux matériaux d'électrode. Tel que décrit ici, le filtrat de cette opération, qui contient la solution de sel de lithium, peut ensuite être chauffé pour récupérer le lithium extrait sous forme de précipité de carbonate de lithium Li₂CO₃, qui est ensuite utilisé avec le FePO₄ récupéré pour fabriquer un nouveau matériau d'électrode.

La comparaison des résultats des exemples 1 et 3 confirme que la quantité d'agent oxydant ou réducteur peut être maintenue autour du rapport stoechiométrique. Un excès stoechiométrique de seulement 10% permet d'ailleurs une efficacité de lixiviation du lithium de plus de 92%. La personne versée dans l'art comprendra que, pour des raisons économiques, et puisque des quantités en excès d'agent oxydant ou réducteur peuvent être perdues dans les étapes suivantes du présent procédé, ledit agent peut être maintenu à un rapport stoechiométrique ou très près.

### Exemple 4

Afin de valider qu'une efficacité de lixiviation élevée peut toujours être atteinte à des rapports solide/liquide encore plus élevés, l'expérience de l'exemple 3 a été modifiée en utilisant 10 parties de matériau de cathode en suspension dans 100 parties d'une solution aqueuse contenant 1% en poids de H₂O₂ avec une pression en CO₂ de 30 psi. Encore une fois, des efficacités de lessivage de Li d'environ 90% ont été obtenus, alors que l'opération a entraîné des taux de lixiviation inférieur à 0,5% pour le Fe et inférieur à 2,5% pour P.

Ceci confirme à nouveau la sélectivité élevée du présent procédé d'extraction du lithium. En outre, comme le solide FePO₄ est maintenu intact, il peut être facilement récupéré par simple filtration. En fait, l'analyse de diffraction des rayons X de la phase solide filtrée a montré une teneur en FePO₄ de 97,7% et de 2,7% en LiFePO₄ suggérant une efficacité de lixiviation du Li encore plus élevée (voir Figure 2).

### Exemple 5

Dans cet exemple, 7.5 parties de LiOH solide ont été dissoutes dans 100 parties d'eau et ajoutées à un réacteur agité contenant une solution aqueuse de 35.5 parties de (NH₄)₂S₂O₈ dans 150 parties d'eau. Le mélange est agité durant 3 heures, le réacteur étant sous vide afin de faciliter l'évacuation du NH₃ gazeux libéré. La formation du Li₂S₂O₈ et l'élimination du NH₃ ont été suivis par surveillance du pH de la solution, qui a diminué de 14 à environ 10, indiquant la présence de très petites quantités de NH₃ et ainsi confirmant la complétion de la réaction selon l'équation suivante:

2 LiOH + (NH₄)₂S₂O₈ → Li₂S₂O₈ + 2 NH₃↑

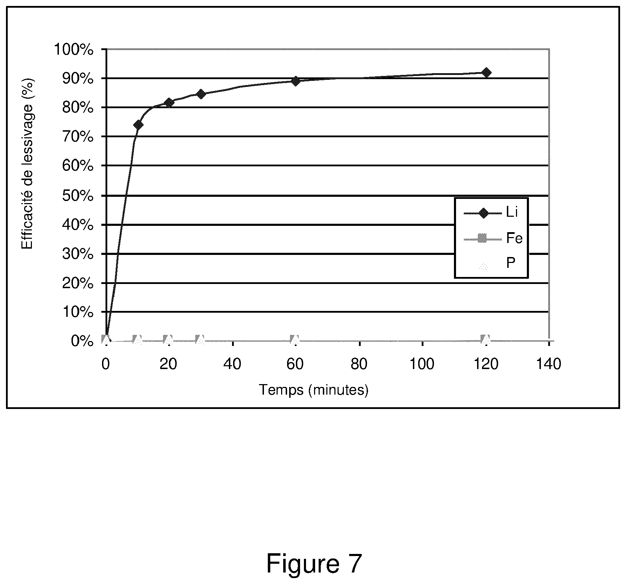

La solution contenant du Li₂S₂O₈ a ensuite été utilisée pour traiter 21 parties de matériau de cathode. Comme on peut voir à la Figure 7, après 2 heures, 92% du lithium ont été extraits du matériau de cathode, alors que moins de 1% de P et presqu'aucun Fe n'ont été trouvés dans la solution, démontrant encore une sélectivité très élevée pour l'extraction du lithium comme pour H₂O₂ et CO₂.

L'analyse de diffraction des rayons X du solide filtré a confirmé la récupération de Fe et P en tant que FePO₄ dans la phase solide (plus de 99,7% de teneur en FePO₄).

### Exemple 6

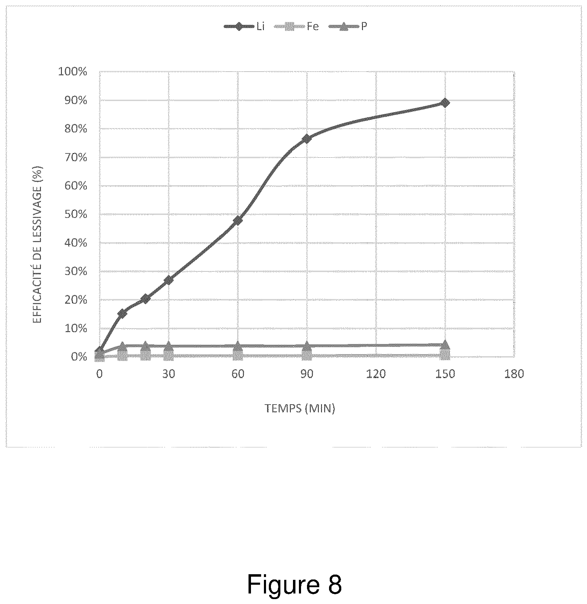

L'expérience présentée à l'Exemple 1 a été répétée par dispersion d'une partie du même type de matériau de cathode contenant majoritairement du LiFePO₄, dans 100 parties d'eau, et agitation et barbotage de CO₂ gazeux, le tout dans un réacteur. Cette fois, le peroxyde d'hydrogène a été remplacé par l'ozone comme agent oxydant. De l'ozone gazeux (généré par un générateur d'ozone alimenté en oxygène) a été injecté dans la dispersion aqueuse à un début d'environ 4 gr/h. La pression du réacteur a été maintenue à 5 psi et la température de réaction était d'environ 25 °C. Comme on peut observer à la Figure 8, l'analyse par ICP d'échantillons récoltés toutes les 30 minutes démontre qu'après 150 minutes, environ 90% du lithium a été extrait en tant que LiHCO₃. Le fait que pas plus de 0,5% du fer et moins de 4,5% du phosphore ont été extraits pendant cette même période montre que la méthode est très sélective ainsi que très efficace.

### Exemple 7

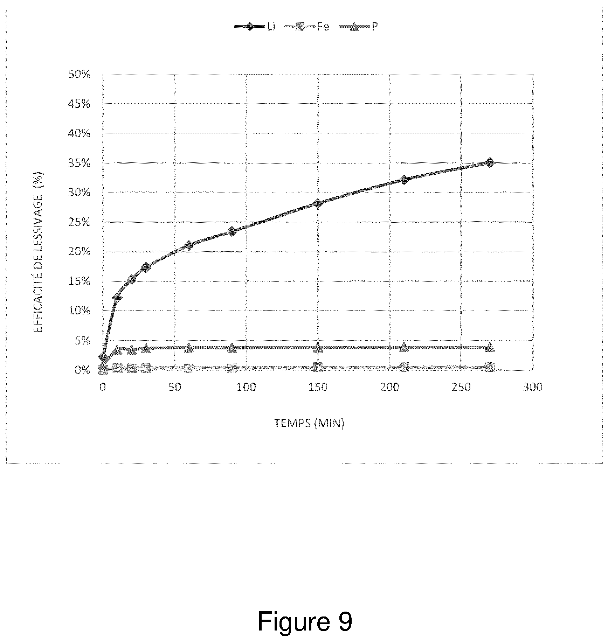

L'essai présenté à l'Exemple 6 a été répété en utilisant un agent oxydant différent, dans ce cas-ci, de l'oxygène gazeux. Ici encore, une partie du même type de matériau de cathode contenant majoritairement du LiFePO₄ a été dispersée dans 100 parties d'eau, la dispersion étant agitée dans un réacteur. De l'oxygène et du CO₂ gazeux ont été barbotés dans le réacteur à une débit d'environ 1,8 L/min en maintenant la pression du réacteur à 30 psi et sa température à environ 25 °C. L'efficacité de lessivage de Li, Fe et P en fonction du temps est présentée à la Figure 9. On peut observer que l'utilisation d'oxygène gazeux permet d'obtenir une extraction sélective du Li étant donné que sont percentage d'extraction augmente de façon constante au fur et à mesure que la réaction progresse (atteignant plus de 35% après 270 minutes) tandis que les percentages d'extraction de Fe et P atteignent très rapidement un plateau et restent à environ 0,5% pour le fer et moins de 4% pour le phosphore. Les cinétiques de réaction semblent être plus lentes qu'avec l'ozone ou H₂O₂, probablement dus à la solubilité beaucoup plus basse de l'oxygène gazeux dans l'eau. Par contre, ces résultats montrent la faisabilité de la réaction utilisant l'oxygène gazeux comme agent oxydant. Il est clair que la cinétique de réaction et l'efficacité de l'extraction peuvent être augmentés par des moyens usuels utilisés dans l'amélioration de dispersion gazeuse dans un réacteur.

### Exemple 8

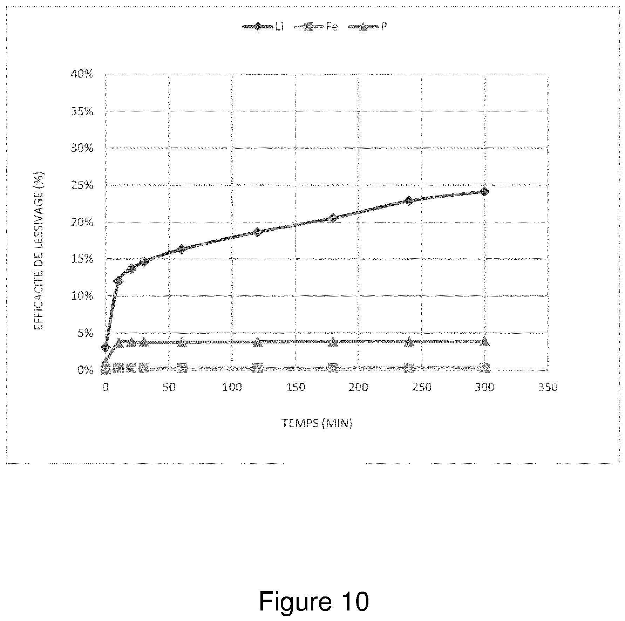

L'expérience présentée à l'Exemple 7 a été répétée sous les mêmes conditions mais en remplaçant l'oxygène par l'air comme agent oxydant. Les résultats (présentés à la Figure 10) montrent encore la faisabilité de l'extraction sélective du lithium, malgré que la cinétique soit plus lente que celle obtenue avec l'oxygène puisque l'efficacité de lessivage était d'environ 24% après 300 minutes de réaction. Encore, les taux de lessivage de Fe et P étaient très bas (moins de 0.4% et 4%, respectivement) ce qui confirme la haute sélectivité de l'extraction du Li. Comme c'est le cas pour l'oxygène, les résultats confirment que l'extraction sélective du Li est tout à fait possible en utilisant de l'air comme agent oxydant.

Par conséquent, le présent procédé fournit une lixiviation sélective et efficace du lithium compris dans un matériau d'électrode usé récupéré, sans utilisation d'acide fort ou de conditions critiques de pression et de températures. Cela permet la régénération du matériau électrochimiquement actif des batteries au lithium à des coûts économiques et environnementaux inférieurs, par rapport aux méthodes conventionnelles.

De nombreuses modifications pourraient être effectuées à l'un ou l'autre des modes de réalisation ci-dessus mentionnés sans sortir du cadre de la présente invention. Les références, brevets ou documents de littérature scientifique mentionnés dans la présente demande sont incorporés ici à titre de référence dans leur intégralité et à toutes fins.

## Revendications

1. Procédé pour le recyclage de matériau actif d'électrode de batterie au lithium, le procédé comprenant les étapes de :
- réaction du matériau actif d'électrode avec du persulfate de lithium en milieu aqueux formant une phase liquide contenant du sulfate de lithium en solution et une phase solide comprenant un oxyde de métal de transition;
- séparation de la phase solide pour recyclage vers la fabrication de nouveau matériau actif d'électrode; et
- récupération de la phase liquide.

2. Procédé de la revendication 1, dans lequel la phase liquide récupérée est séparée en une première et une deuxième fractions, dans lesquelles :
- la première fraction est utilisée comme matériau ajouté à un anolyte d'une cellule électrolytique dans laquelle le sulfate de lithium est réoxydé en persulfate de lithium pour réutilisation dans le traitement d'autres matériaux actif d'électrode; et
- la deuxième fraction est utilisée pour récupérer le lithium sous forme de carbonate de lithium, par traitement au CO₂ ou avec un sel de carbonate, ou d'hydroxyde de lithium, par électrolyse de dissociation de sel.

3. Procédé de la revendication 1 ou 2, dans lequel la réaction est effectuée entre 5 et 60°C.

4. Procédé de la revendication 3, dans lequel la réaction est effectuée entre 20 et 40°C afin de maintenir le persulfate de lithium stable.

5. Procédé de l'une quelconque des revendications 2 à 4, dans lequel la première fraction est convertie en hydroxyde de lithium et en acide sulfurique par électrolyse, l'hydroxyde de lithium étant à nouveau réagit avec du persulfate d'ammonium pour produire le persulfate de lithium.

6. Procédé de la revendication 5, dans lequel la réaction entre l'hydroxyde de lithium et le persulfate d'ammonium est effectuée sous vide, et dans lequel le NH₃ gazeux éliminé est récupéré et recyclé dans la formation de sulfate d'ammonium, ledit sulfate d'ammonium étant ajouté à l'anolyte d'une cellule électrolytique pour produire du persulfate d'ammonium.
